# EUROPÄISCHE PATENTSCHRIFT

(11) **EP 1 303 950 B1**
(45) Veröffentlichungstag und Bekanntmachung des Hinweises auf die Patenterteilung: **23.03.2005**
(21) Anmeldenummer: 01953132.6
(22) Anmeldetag: 03.07.2001
(51) Int. Cl.: H04L 12/56, H04L 29/06

(54) **VERFAHREN UND ANORDNUNGEN ZUR ROUTER-ANKÜNDIGUNG IN EINEM NETZ MIT MOBILEN ANKERPUNKTEN**
METHOD AND ARRANGEMENTS FOR ROUTER ADVERTISEMENT IN A NETWORK WITH MOBILE ANCHOR POINTS
PROCEDE ET DISPOSITIFS POUR ANNONCES DE ROUTEURS DANS UN RESEAU A POINTS D'ANCRAGE MOBILES

(30) Priorität: 14.07.2000 DE 10034283
(43) Veröffentlichungstag der Anmeldung: 23.04.2003
(73) Patentinhaber: SIEMENS AKTIENGESELLSCHAFT, 80333 München (DE)
(72) Erfinder: GRIMMINGER, Jochen, 80638 München (DE)
(86) Internationale Anmeldenummer: PCT/DE2001/002448
(87) Internationale Veröffentlichungsnummer: WO 2002/007392

(56) Entgegenhaltungen:
- HESHAM SOLIMAN, KARIM EL MALKI: "Hierarchical Mobile IPv6 and Fast Handoffs" IETF MOBILE IP WORKING GROUP, [Online] 28. Juni 2000 (2000-06-28), Seiten 1-17, XP002179511 Internet draft: draft-soliman-mobileip-hmipv6-00.txt Gefunden im Internet: <URL:www.ietf.org> [gefunden am 2001-10-08]
- KITAMURA H.: "Connection/Link Status Investigation (CSI) for IPv6, IPv6 HHop-by-Hop option and ICMPv6 message Extension" IETF INTERNET DRAFT, [Online] 26. Februar 1999 (1999-02-26), Seiten 1-17, XP002179512 draft-kitamura-ipv6-hbh-ext-csi-00.txt Gefunden im Internet: <URL:www.ietf.org> [gefunden am 2001-10-08]
- STALLINGS W: "IPV6: THE NEW INTERNET PROTOCOL" IEEE COMMUNICATIONS MAGAZINE, IEEE SERVICE CENTER. PISCATAWAY, N.J, US, Bd. 34, Nr. 7, 1. Juli 1996 (1996-07-01), Seiten 96-108, XP000623747 ISSN: 0163-6804

## Beschreibung

Die Erfindung betrifft die Übertragung einer Router-Ankündigungs-Nachricht von einem Router von einem Mobilitäts-Ankerpunkt in einem Netz zu einem gegebenenfalls mobilen Knoten.

In einer ersten Veröffentlichung [1] wird ein hierarchisches mobiles Internet-Protokoll vorgestellt, das spezielle Botschaft von einem Mobilitäts-Ankerpunkt (MAP) durch ein Router-Netzwerk bis hin zu einem empfangenden mobilen Knoten überträgt. Bei diesem Verfahren senden die Router der mobilen Ankerpunkte Router-Ankündigungs-Nachrichten (Router Advertisement message) periodisch aus oder antworten auf Router-Anfragen. Zukünftige Versionen dieses Protokolls werden möglicherweise beinhalten, dass Empfänger stillschweigend jegliche Optionen ignorieren, die diese Nachrichten nicht erkennen und weiterleiten. Der mobile Ankerpunkt wird so konfiguriert, dass er seine Optionen oder von anderen mobilen Ankerpunkten weitergeleiteten Optionen auf speziellen Interfaces empfängt oder weiterleitet. Die Option des mobilen Ankerpunktes wird innerhalb der Hierarchie weitergeleitet. Jeder Router entlang dieses Pfades bis zum Access-Router zum Netz wird die Sprunggrenzen in der Router-Ankündigungs-Nachricht verändern, falls ein Router, der ebenfalls ein mobiler Ankerpunkt ist, eine Router-Ankündigung von einem anderen mobilen Ankerpunkt empfängt, soll dieser seine eigene MAP-Option hinzufügen und die beiden Options zur weiteren Hierarchiestufe weiterleiten. In dem Entwurf ist vorgesehen, dass alle Router die Nachricht erfassen, die Nutzlast auswerten, verändern und wieder versenden. Hierfür werden jedoch spezielle Router im gesamten Netzwerk benötigt.

Die der Erfindung zugrunde liegende Aufgabe besteht nun darin, ein Verfahren und eine Anordnung anzugeben, bei der eine Router-Ankündigungs-Nachricht von einem ersten Mobilitäts-Ankerpunkt zu einem mobilen Knoten schneller verändert und weitergereicht werden kann.

Diese Aufgabe wird hinsichtlich des Verfahrens durch Anspruch 1 und hinsichtlich der Anordnung durch Anspruch 2 gelöst.

Die Erfindung besteht im Wesentlichen darin, dass nicht mehr alle Router innerhalb eines Netzwerkes, sondern nur die Router von mobilen Ankerpunkten (MAPs) die Sprungzahlen von den mobilen Ankerpunkten verändern müssen und eine Berechnung der Sprünge im jeweiligen mobilen Knoten aus der Sprunggrenze und den jeweiligen Sprungzahlen erfolgt.

Die Erfindung wird nachfolgend anhand eines in den Zeichnungen dargestellten Anwendungsbeispiels näher erläutert. Dabei zeigt
- Figur 1: ein Prinzipbild eines mobilen hierarchischen Netzes zur Erläuterung der Erfindung,
- Figur 2: den Aufbau einer Router-Ankündigungs-Nachricht zur Erläuterung der Erfindung,
- Figur 3a: die zeitliche Entwicklung der Nachricht von Figur 2 am Beispiel von Figur 1 bei Anwendung des erfindungsgemäßen Vewrfahrens und
- Figur 3b: zum Vergleich dazu die zeitliche Entwicklung der Nachricht von Figur 2 am Beispiel von Figur 1 bei Anwendung des bekannten Verfahrens.

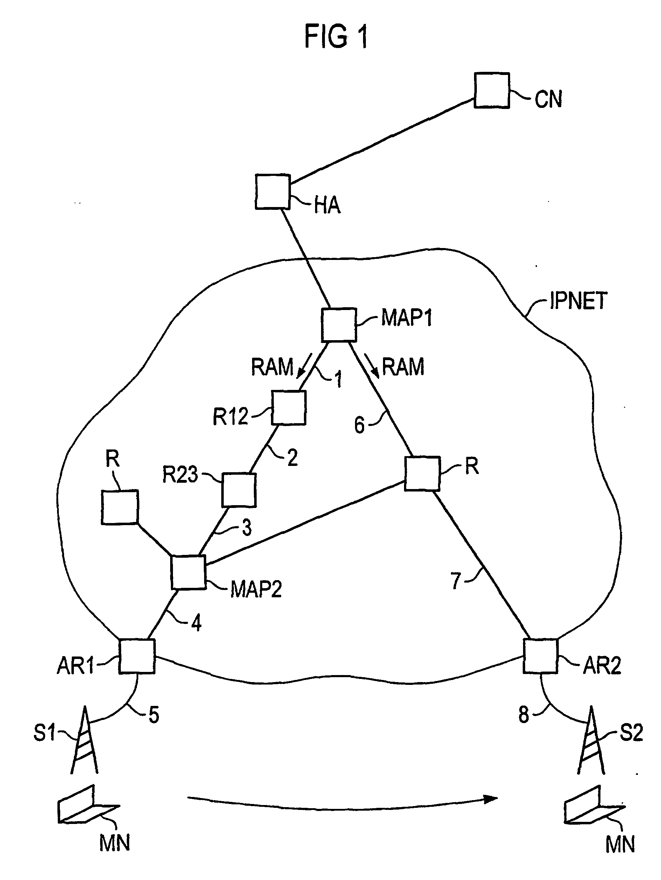

In Figur 1 ist ein Prinzipbild eines hierarchischen mobilen Netzes gezeigt, wobei ein mobiler Knoten MN entweder über eine Mobilfunkstation S1 mit einem Zugriffs-Router AR1 oder über eine Mobilfunkstation S2 mit einem weiteren Zugriffs-Router AR2 mit einem Netz, zum Beispiel einem lokalen IP-Netz, IPNET verbindbar ist. Darüberhinaus steht hier beispielhaft ein korrespondierender Knoten CN mit einem Rechner in Verbindung, der einen sogenannten Homeagent HA für den mobilen Knoten MN darstellt. Dieser Homeagent HA steht seinerseits beispielhaft in Verbindung mit einem Router des IP-Netzes, der einen ersten Mobilitäts-Ankerpunkt MAP1 bildet. Der Knoten CN kann aber beispielsweise auch direkt mit dem Knoten MN kommunizieren. Der Mobilitäts-Ankerpunkt MAP1 sendet hier in regelmäßigen Abständen Router-Ankündigungs-Nachrichten (Router Advertisement messages) über einen Pfad 1 bis 5 oder einen Pfad 6 bis 8 zum mobilen Knoten MN, worauf dieser sich beispielsweise beim Homeagent HA und danach beim mobilen Ankerpunkt MAP1 meldet. Auf dem Pfad 1 bis 5 liegen normale Router R12, R23, aber auch ein Router für einen weiteren Mobilitäts-Ankerpunkt MAP2 und ein Zugriffs-Router AR1 für das Netz IPNET. Auf dem Pfad 6 bis 8 liegen ebenfalls eine Reihe von Routern R und am Ende ein Zugriffs-Router AR2.

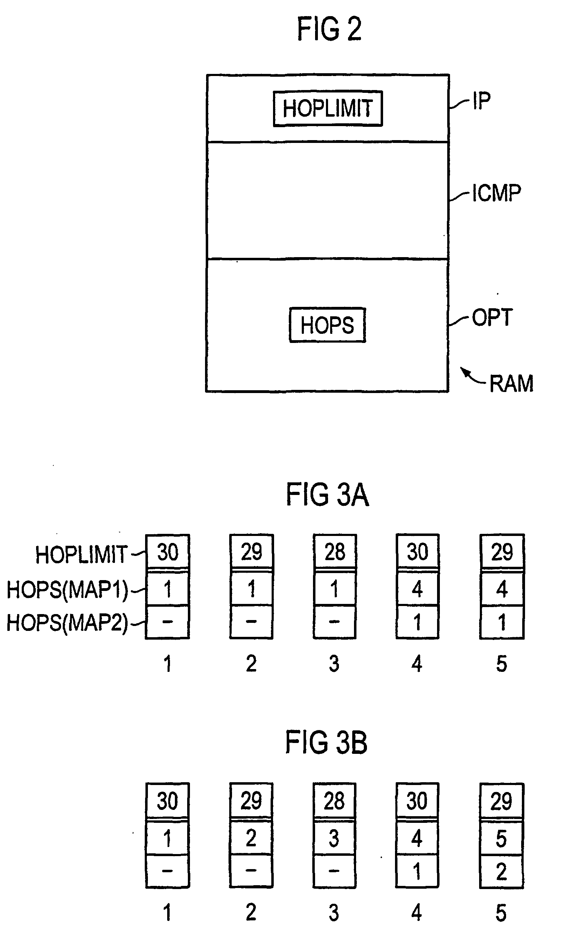

In Figur 2 ist der Aufbau einer Router-Ankündigungs-Nachricht RAM schematisch dargestellt, wobei beim Internet-Protokoll IP v6 [2] eine solche Nachricht einen ersten Teil IP, einen zweiten Teil ICMP und einen dritten Teil OPT aufweist. Der Teil IP stellt einen Nachrichten-Header dar und der Teil OPT beinhaltet optionale Informationen. Im Header IP befindet sich ein Datenfeld für eine Sprunggrenze HOPLIMIT und dem Teil OPT befinden sich Sprungzähler HOPS für Mobilitäts-Ankerpunkte.

In Figur 3a wird nun anhand des in Figur 1 dargestellten Pfades 1 bis 5 die Entwicklung der Router-Ankündigungs-Nachricht RAN entlang des Pfades 1 bis 5 bei der Durchführung des erfinderischen Verfahrens gezeigt. Zu Beginn ist hierbei die Sprunggrenze HOPLIMIT beispielsweise auf den Maximalwert=30 gesetzt und nach dem Router MAP1 ist der Sprungzähler HOPS(MAP1)=1 für den Router MAP1 und wird erst durch den nächsten mobilen Ankerpunkt MAP2 geändert. Die Sprunggrenze HOPLIMIT wird nach jedem Router um eins verringert und vom nächsten Mobilitäts-Ankerpunkt MAP2 wieder auf den Maximalwert rückgesetzt. Der zweite Mobilitäts-Ankerpunkt errechnet nun HOPS (MAP1) = ursprüngliche 1 + max HOPLIMIT- aktuelles HOPLIMIT+ Inkrement 1=1+30-28+1=4 und setzt den Sprungzähler HOPS(MAP2) auf 1. Da der Zugriffs-Router AR1 kein MAP ist, wird nur die Sprunggrenze HOPLIMIT auf 29 gesetzt und die Sprungzähler bleiben auf 4 und 1 bestehen. Im mobilen Knoten werden dann die Sprungzahlen um max HOPLIMIT-aktuelles HOPLIMIT= 30 - 29 = 1 jeweils erhöht, wodurch die Sprungzahlen im mobilen Knoten in sehr einfacher Weise zu 5 und 2 errechnet werden.

In Figur 3b ist zum Vergleich die im Stand der Technik vorgeschlagene Entwicklung der Nachrichten RAN auf dem Pfad 1 bis 5 dargestellt. Auch hier wird die Sprunggrenze nach jedem Router um 1 herabgesetzt und durch einen Router für einen weiteren Mobilitäts-Ankerpunkt MAP2 wieder auf den Maximalwert rückgesetzt. Der wesentliche Unterschied hierbei ist jedoch, dass von jedem Router die Sprungzähler im weiteren Teil OPT der Nachricht RAM modifiziert werden, was einen erheblich höheren Zeitaufwand bedeutet. Am Ende stehen hier auch die Sprungzahlen 5 und 2 in den Sprungzählern.

Wesentlich ist hierbei auch, dass die normalen Router für diesen Zweck nicht mehr die Nutzlast lesen und auswerten müssen. Im normalen Internet-Protokoll IP v6 wird von jedem Router die Sprunggrenze ohnehin inkrementiert. Der weiterleitende weitere Mobilitäts-Ankerpunkt MAP2 hat hierdurch alle Informationen, um die Sprungzähler auf die richtigen Werte zu setzen. Der mobile Ankerpunkt MAP2 muss ohnehin die Nutzlast des Pakets berechnen und es bedeutet somit nur einen geringen Mehraufwand der Berechnung der Sprungzähler. Dasselbe gilt für den mobilen Knoten MN. Der braucht nur die Sprungzähler zwischen dem letzten mobilen Ankerpunkt und ihm selbst zu den empfangenen Sprungzählern addieren. Von besonderem Vorteil ist, dass für eine erhebliche Geschwindigkeitsverbesserung nur ein geringfügige Softwareänderung erforderlich ist.
[1] www.ietf.org/internet-drafts/draft-soliman-mobileiphmipv6-00.txt vom 5.7.2000
[2] www.ietf.org/rfc/rfc2461.txt vom 5.7.2000

## Patentansprüche

1. Verfahren zur Router-Ankündigung in einem Datennetz, bei dem eine Router-Ankündigungs-Nachricht (RAM) von einem Router für einen ersten Mobilitäts-Ankerpunkt (MAP1) über eine Mehrzahl von weiteren Routern (R12, R23, MAP2, AR1) eines Netzes (IPNET) zu einem mobilen Knoten (MN) verändert weitergeleitet wird, wobei die Router-Ankündigungs-Nachricht in einem ersten Teil (IP) eine Sprunggrenze (HOPLIMIT) und in einem weiteren Teil (OPT) Sprungzahlen (HOPS(MAP1), HOPS(MAP2)) enthält, bei dem die Sprunggrenze von jedem weiteren Router verändert wird und nur Router, die weitere Mobilitäts-Ankerpurikte (MAP2) bilden, auch die Sprungzahlen im weiteren Teil (OPT) der Nachricht lesen und verändern und bei dem die Sprünge (1 ... 5) zwischen dem mobilen Knoten (MN) und den mobilen Ankerpunkten (MAP1, MAP2) aus der Sprunggrenze (HOPLIMIT) und der jeweiligen Sprungzahl (HOPS(MAP1), HOPS(MAPS2)) berechnet werden.

2. Anordnung zur Bildung eines Mobilitäts-Ankerpunktes (MAP1, MAP2) in einem Datennetz, die derart eingerichtet ist, dass jeweils eine neue Sprungzahl (HOPS(MAP1), HOPS(MAPS2)) von einem jeweiligen Mobilitäts-Ankerpunkt (HOPS1, HOPS2) in einem weiteren Teil (OPT) der Router-Aakündigungs-Nachricht aus einer Sprunggrenze (HOPLIMIT) in einem ersten Teil (IP) einer Router-Anktindigungs-Nachricht (RAM) und jeweiligen bisherigen Sprungzahl (HOPS(MAP1), HOPS (MAP2)) von einem jeweiligen Mobilitäts-Ankerpunkt (HOPS1, HOPS2) in einem weiteren Teil (OPT) der Router-Ankündigungs-Nachricht berechnet wird, wobei die bisherige Sprungzahl (HOPS(MAP1), HOPS(MAP2)) des jeweiligen Mobilitäts-Ankerpunktes (HOPS1, HOPS2) nur von Routern (MAP1, MAP2), die Mobilitäts-Ankerpunkte bilden, verändert wurde.

3. Anordnung zur Bildung eines mobilen Knotens (MN) in einem Datennetz, die derart eingerichtet ist, dass jeweils eine erforderliche Sprungzahl zwischen dem mobilen Knoten (MN) und einem jeweiligen Mobilitäts-Ankerpunkt (MAP1, MAP2) des Netzes aus einer Sprunggrenze (HOPLIMIT) in einem ersten Teil (IP) einer Router-Ankündigungs-Nachricht (RAM) und jeweiligen Sprungzahl (HOPS(MAP1), HOPS(MAPS2)) von einem jeweiligen Mobilitäts-Ankerpunkt (HOPS1, HOPS2) in einem weiteren Teil (OPT) der Router-Ankündigungs-Nachricht berechnet wird, wobei die jeweilige Sprungzahl (HOPS (MAP1), HOPS (MAP2)) des jeweiligen Mobilitäts-Ankerpunktes (HOPS1, HOPS2) nur von Routern (MAP1, MAP2), die Mobilitäts-Ankerpunkte bilden, verändert wurde.

## Claims

1. Method for router advertisement in a data network in which a router advertisement message (RAM) is forwarded changed from a router for a first mobile anchor point (MAP1) via a plurality of further routers (R12, R23, MAP2, AR1) in a network (IPNET) to a mobile node (MN), the router advertisement message containing a hop limit (HOPLIMIT) in a first part (IP) and hop numbers (HOPS(MAP1), HOPS(MAP2)) in a further part (OPT), in which the hop limit is changed by every further router and only routers which form further mobile anchor points (MAP2) also read and change the hop numbers in the further part (OPT) of the message and in which the hops (1...5) between the mobile node (NM) and the mobile anchor points (MAP1, MAP2) are calculated from the hop limit (HOPLIMIT) and the respective hop number (HOPS(MAP1), HOPS(MAP2)).

2. Aarrangement for forming a mobile anchor point (MAP1, MAP2) in a data network, which is set up in such a manner that a new hop number (HOPS(MAP1), HOPS(MAP2)) is in each case calculated by a respective mobile anchor point (HOPS1, HOPS2) in a further part (OPT) of the router advertisement message from a hop limit (HOPLIMIT) in a first part (IP) of a router advertisement message (RAM) and a respective previous hop number (HOPS(MAP1), HOPS(MAP2)) from a respective mobile anchor point (HOPS1, HOPS2) in a further part (OPT) of the router advertisement message, the previous hop number (HOPS(MAP1), HOPS(MAP2)) of the respective mobile anchor point (HOPS1, HOPS2) having been changed only by routers (MAP1, MAP2) which form mobile anchor points.

3. Arrangement for forming a mobile node (MN) in a data network, which is set up in such a manner that a required hop number between the mobile node (MN) and a respective mobile anchor point (MAP1, MAP2) in the network is in each case calculated from a hop limit (HOPLIMIT) in a first part (IP) of a router advertisement message (RAM) and respective hop number (HOPS(MAP1), HOPS(MAPS2)) from a respective mobile anchor point (HOPS1, HOPS2) in a further part (OPT) of the router advertisement message, the respective hop number (HOPS(MAP1), HOPS(MAP2)) of the respective mobile anchor point (HOPS1, HOP2) having been changed only by routers (MAP1, MAP2) which form mobile anchor points.

## Revendications

1. Procédé pour l'annonce de routeur dans un réseau de données, dans lequel un message d'annonce de routeur (RAM) est transmis, en étant modifié, par un routeur pour un premier point d'ancrage mobile (MAP1) par l'intermédiaire d'une pluralité d'autres routeurs (R12, R23, MAP2, AR1), d'un réseau (IPNET) vers un noeud mobile (MN), le message d'annonce de routeur contenant, dans une première partie (IP), une limite de sauts (HOPLIMIT) et, dans une autre partie (OPT), des nombres de sauts (HOPS (MAP1), HOPS (MAP2)), dans lequel la limite de sauts est modifiée par chaque autre routeur et dans lequel seuls les routeurs qui forment les autres points d'ancrage mobiles (MAP2) lisent également les nombres de sauts dans l'autre partie (OPT) du message et les modifient, et dans lequel les sauts (1 ...5) entre le noeud mobile (MN) et les points d'ancrage mobiles (MAP1, MAP2) sont calculés à partir de la limite de sauts (HOPLIMIT) et du nombre de sauts respectif (HOPS (MAP1), HOPS (MAP2)).

2. Dispositif pour former un point d'ancrage mobile (MAP1, MAP2) dans un réseau de données, ce dispositif étant exécuté de telle manière qu'un nouveau nombre de sauts (HOPS (MAP1), HOPS (MAP2)) est respectivement calculé par un point respectif d'ancrage mobile (HOPS1, HOPS2) dans une autre partie (OPT) du message d'annonce de routeur à partir d'une limite de sauts (HOPLIMIT) dans une première partie (IP) d'un message d'annonce de routeur (RAM) et d'un nombre de sauts respectif disponible jusqu'à présent (HOPS (MAP1), HOPS (MAP2)) d'un point respectif d'ancrage mobile (HOPS1, HOPS2) dans une autre partie (OPT) du message d'annonce de routeur, le nombre de sauts disponible jusqu'à présent (HOPS (MAP1), HOPS (MAP2)) du point respectif d'ancrage mobile (HOPS1, HOPS2) n'ayant été modifié que par les routeurs (MAP1, MAP2) formant des points d'ancrage mobiles.

3. Dispositif pour former un noeud mobile (MN) dans un réseau de données, ce dispositif étant exécuté de telle manière qu'un nombre de sauts respectivement nécessaire entre le noeud mobile (MN) et un point respectif d'ancrage mobile (MAP1, MAP2) du réseau est calculé à partir d'une limite de sauts (HOPLIMIT) dans une première partie (IP) d'un message d'annonce de routeur (RAM) et d'un nombre de sauts respectif (HOPS (MAP1), HOPS (MAP2)) d'un point respectif d'ancrage mobile (HOPS1, HOPS2) dans une autre partie (OPT) du message d'annonce de routeur, le nombre de sauts respectif (HOPS (MAP1), HOPS (MAP2)) du point respectif d'ancrage mobile (HOPS1, HOPS2) n'ayant été modifié que par les routeurs (MAP1, MAP2) formant des points d'ancrage mobiles.
